# FASCICULE DE BREVET EUROPEEN

(11) **EP 0 664 455 B1**
(45) Date de publication et mention de la délivrance du brevet: **22.07.1998**
(21) Numéro de dépôt: 94402990.9
(22) Date de dépôt: 22.12.1994
(51) Int. Cl.: G01P 3/488, G01P 3/486

(54) **Tachymètre à effet magnéto-optique**
Magneto-optischer Geschwindigkeitsmesser
Magneto-optical speedometer

(30) Priorité: 25.01.1994 FR 9400753
(43) Date de publication de la demande: 26.07.1995
(73) Titulaire: SEXTANT Avionique, 92366 Meudon la Forêt Cedex (FR)
(72) Inventeur: Breda, Jean-Marc, F-75015 Paris (FR); Roberge, Philippe, F-92130 Issy Les Moulineaux (FR)
(74) Mandataire: Geismar, Thierry

(56) Documents cités:
- DE-A- 3 711 326
- US-A- 4 947 035
- PATENT ABSTRACTS OF JAPAN vol. 18 no. 45 (P-1681) ,24 Janvier 1994 & JP-A-05 273059 (MAZDA MOTOR CORP.)
- PATENT ABSTRACTS OF JAPAN vol. 14 no. 422 (P-1104) ,12 Septembre 1990 & JP-A-02 165077 (FUJI PHOTO FILM CO LTD)

## Description

La présente invention concerne un tachymètre à effet magnéto-optique.

Dans un grand nombre d'utilisations industrielles, on a besoin de connaître avec précision la vitesse de rotation de machines ou de moteurs. Dans le domaine aéronautique, les applications sont nombreuses : vitesse de rotor d'hélicoptère, régulation des moteurs, surveillance des boîtes de vitesse, vitesse des roues du train d'atterrissage...

Pour résoudre ce problème, plusieurs types de capteurs tachymétriques ont été développés. En aéronautique, on utilise généralement des alternateurs homopolaires qui fonctionnent de la manière suivante.

Sur l'arbre dont on souhaite connaître la vitesse de rotation, on fixe une roue dentée en acier magnétique. Le capteur est constitué d'une bobine à noyau magnétique contre laquelle est collé coaxialement un aimant. L'ensemble est disposé de telle sorte que les variations de flux au passage des dents créent une tension périodique induite aux bornes de la bobine.

La fréquence du signal est représentative de la vitesse de rotation de l'arbre.

Ces capteurs, bien que très simples et très robustes, présentent certains défauts.

En premier lieu, leur plage de mesure est limitée. En effet, par principe, ces capteurs délivrent toujours un signal dont l'amplitude est proportionnelle à la vitesse, ce qui pose des problèmes à basse vitesse et notamment dans les phases de démarrage.

Par ailleurs, ils sont sensibles aux parasites induits par les champs électromagnétiques ou conduits par le réseau de bord.

Enfin, ils risquent d'être détruits par la foudre.

On a également proposé dans le document US-A-A 947 035 un capteur magnéto-optique et notamment un tachymètre comprenant :
- une roue dentée susceptible d'être calée sur un arbre dont on souhaite mesurer la vitesse de rotation ;
- un aimant permanent en vis-à-vis de la roue dentée ;
- un cristal en matériau à effet Faraday disposé dans le champ magnétique dudit aimant permanent ;
- une fibre optique et un polariseur pour éclairer le cristal à l'aide d'un faisceau de lumière polarisée; et
- un analyseur et une photodiode pour mesurer la rotation de la polarisation du faisceau résultant de sa traversée dudit cristal.

Un tel capteur présente toutefois un inconvénient empêchant de l'utiliser dans le domaine des turbo-machines. En effet, les cristaux en matériau à effet Faraday ont pour caractéristique une température de Curie, au-dessus de laquelle ils perdent leurs propriétés magnéto-optiques, trop basse.

A titre indicatif, les tachymètres utilisés dans ce domaine doivent pouvoir fonctionner jusqu'à des températures au moins égales à 400° C. Or, le matériau cité dans le document précédent, à savoir le grenat yttrium-fer (YIG), bien que possédant un pouvoir rotatoire moyen, a une température de Curie de seulement 280° C.

La présente invention vise à pallier ces inconvénients.

A cet effet, l'invention a pour objet un tachymètre comprenant :
- une roue dentée susceptible d'être calée sur un arbre dont on souhaite mesurer la vitesse de rotation ;
- un circuit magnétique en vis-à-vis de la roue dentée ;
- au moins un élément en matériau magnéto-optique dans le champ magnétique dudit circuit magnétique ;
- des moyens pour éclairer ledit matériau à l'aide d'un faisceau de lumière polarisée; et
- des moyens de mesure pour mesurer la rotation de la polarisation dudit faisceau résultant de son interaction avec ledit matériau ;
caractérisé par le fait que ledit matériau magnéto-optique est un matériau à effet Kerr, ledit faisceau subissant au moins une réflexion sur au moins un cristal de ce matériau.

Les effets magnéto-optiques sont, d'une manière générale, des effets de rotation de la polarisation d'un faisceau de lumière polarisée en présence d'un champ magnétique lors de son interaction avec un matériau approprié. Les matériaux à effet Faraday sont des matériaux transparents à la longueur d'onde du faisceau considéré et qui provoquent, lorsqu'ils sont traversés par un faisceau de lumière polarisée, une rotation de la polarisation de ce faisceau proportionnelle à l'épaisseur de matériau traversé.

L'effet Kerr est également un effet magnéto-optique. Toutefois, les matériaux considérés sont différents de même que le type d'interaction qu'ils ont avec le faisceau de lumière polarisée. En effet, les matériaux à effet Kerr sont opaques à la longueur d'onde du faisceau avec lequel ils interagissent et c'est par réflexion à la surface d'un cristal en matériau à effet Kerr qu'un faisceau de lumière polarisée voit sa polarisation tourner.

L'effet Kerr est plus faible que l'effet Faraday mais il présente l'avantage que les matériaux magnéto-optiques à effet Kerr présentent une température de Curie bien supérieure à celle des matériaux magnéto-optiques à effet Faraday, et qu'ils peuvent donc être utilisés dans des tachymètres susceptibles d'applications dans le domaine des turbo-machines notamment.

La lumière peut notamment être amenée à l'élément en matériau à effet Kerr à l'aide d'une fibre optique.

On prévoit également de préférence un polariseur entre la source de lumière, notamment l'extrémité de la fibre optique, et le cristal en matériau à effet Kerr. Un tel polariseur n'est toutefois pas nécessaire dans le cas où l'on utilise une fibre optique monomode à conservation de polarisation.

Dans un mode de réalisation particulier de l'invention, on prévoir deux cristaux en matériau à effet Kerr disposés en vis-à-vis, sur lesquels le faisceau lumineux est successivement réfléchi une pluralité de fois.

Un telle disposition permet de multiplier la rotation de la polarisation par le nombre de réflexions, et ainsi de faciliter la détection de l'angle de rotation.

Egalement dans un mode de réalisation particulier, on prévoit une lame quart d'onde sur le trajet du faisceau lumineux incident, ainsi que sur le trajet du faisceau réfléchi. La lame quart d'onde du trajet incident transforme la polarisation linéaire de ce faisceau incident en polarisation elliptique qui, après réflexion sur le cristal à effet Kerr change légèrement d'ellipticité. Après traversée de la lame quart d'onde du faisceau réfléchi, éventuellement la même que celle du faisceau incident, la polarisation redevient linéaire, mais a tourné d'un angle dû à l'effet Kerr. On verra ci-après qu'un tel agencement facilite également la détection de la rotation de la polarisation.

Le tachymètre selon l'invention peut comprendre une fibre optique pour conduire le faisceau lumineux réfléchi sur le cristal en matériau à effet Kerr, jusqu'à des moyens de mesure de l'intensité dudit faisceau.

Ces moyens de mesure peuvent en particulier comprendre un polariseur disposé sur le trajet du faisceau lumineux réfléchi par le cristal en matériau à effet Kerr.

On décrira maintenant à titre d'exemple non limitatif des modes de réalisation particulier de l'invention, en référence aux dessins annexés dans lesquels :
- la figure 1 est un schéma de principe d'un tachymètre selon l'invention, et
- les figures 2 et 3 sont des représentations de modes de réalisation particuliers.

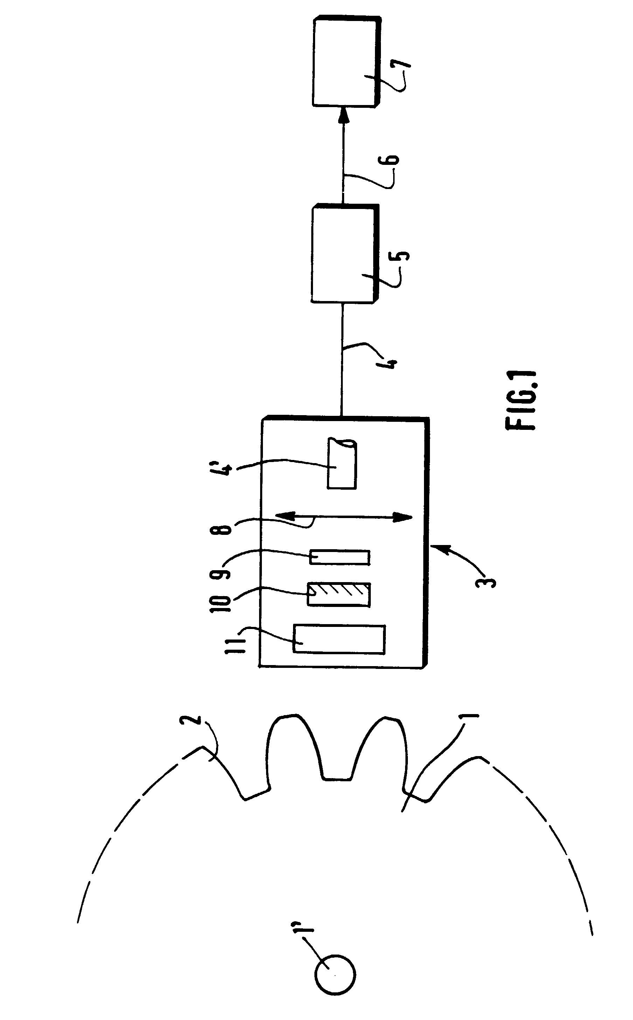

Le tachymètre de la figure 1 comprend une roue 1 munie de dents 2. Cette roue est calée sur l'arbre 1' dont on souhaite mesurer la vitesse de rotation.

Une tête de capteur 3 est montée en vis-à-vis de la roue dentée 1 pour réaliser la transduction de la vitesse de rotation de cette roue en signal optique modulé à la fréquence de passage des dents de la roue. Ce signal est transmis par une fibre optique 4, à une unité opto-électronique 5 assurant l'émission, la réception et le traitement du signal optique tachymétrique. Cette unité 5 fournit un signal électrique consistant, par exemple, en impulsions se succédant au rythme du passage des dents 2 devant la tête 3.

Ce signal électronique est transmis par une ligne 6 à un processeur 7 qui en déduit la vitesse de rotation de l'arbre 1'.

La tête de capteur 3 comprend pour l'essentiel l'extrémité 4' de la fibre optique 4, une optique de collimation 8, un polariseur 9, un cristal 10 à effet Kerr et un circuit magnétique 11 constitué ici d'un aimant permanent.

La lumière provenant de la fibre optique 4, collimatée dans l'optique 8, est polarisée dans le polariseur 9. Elle est ensuite réfléchie par le cristal 10, puis retraverse le polariseur 9 et l'optique de collimation 8, avant d'être retransmise par la fibre optique 4 à l'unité opto-électronique 5.

Suivant la position des dents 2 de la roue 1, le champ magnétique à travers le circuit magnétique 11 et le cristal 10 varient, et par conséquent, par effet Kerr, la polarisation de la lumière subit une rotation plus ou moins importante. Cette lumière n'est donc pas intégralement transmise au retour par le polariseur 9. L'intensité lumineuse renvoyée à l'unité opto-électronique 5 varie donc à une fréquence dépendant de la vitesse de passage des dents 2 devant la tête de capteur 3.

Le signal électronique transmis par la ligne 6 de l'unité opto-électronique 5 au processeur 7 est donc modulé de la même manière, de sorte que ce processeur 7 peut déduire de ce signal la vitesse de rotation de l'arbre 1'.

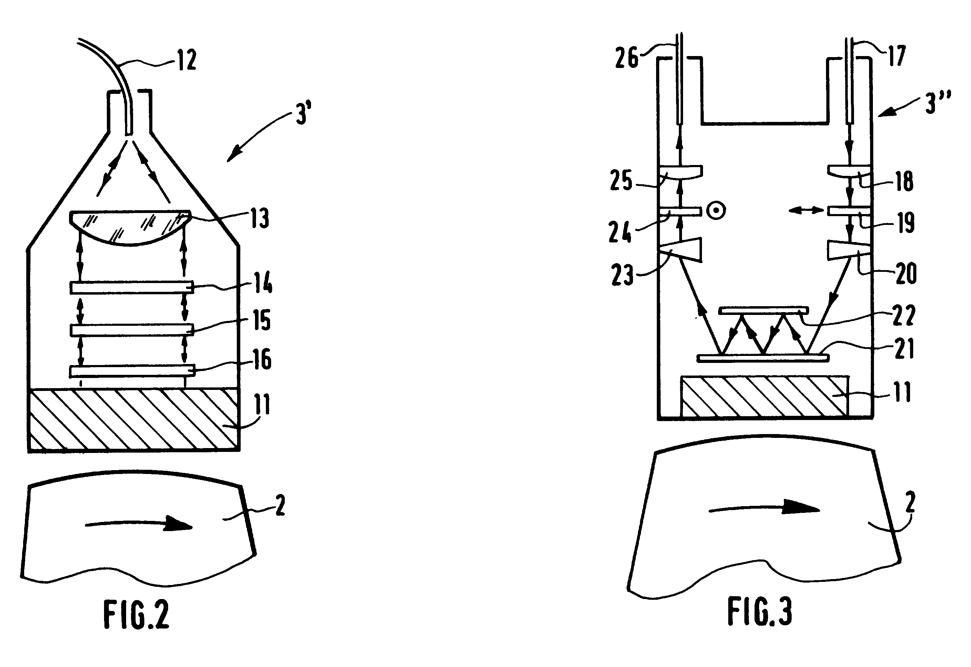

Les figures 2 et 3 illustrent deux autres modes de réalisation 3' et 3'' de la tête de capteur 3.

Dans le mode de la réalisation de la figure 2, le faisceau lumineux issu de la fibre optique multimode 12 est collimatée au moyen de la lentille 13. Après avoir traversé le polariseur linéaire 14 et une lame quart d'onde 15, le faisceau est réfléchi à la surface d'un cristal 16 en matériau magnéto-optique à effet Kerr puis retraverse la lame 15, le polariseur 14, la lentille 13 et est renvoyé dans la fibre optique 12.

La lumière est donc polarisée linéairement à la traversée du polariseur 14. La lame quart d'onde 15 rend cette polarisation elliptique. Après réflexion sur le cristal 16, la polarisation de la lumière change légèrement d'ellipticité du fait de l'effet Kerr. Cette ellipticité dépend du champ magnétique dans le cristal 16 et par conséquent de la position des dents 2 de la roue par rapport à la tête de capteur 3'. Après avoir traversé au retour la lame quart d'onde 15, la lumière redevient polarisée linéairement mais sa polarisation a subi une certaine rotation dû à l'effet Kerr. Le polariseur linéaire 14 ne laisse donc retourner dans la fibre optique 12 qu'une partie de l'intensité lumineuse, fonction de cet angle de rotation et donc de la position de la roue dentée.

On peut montrer que, pour optimiser la modulation de l'intensité lumineuse réfléchie, il est avantageux de faire tourner la polarisation de la lumière réfléchie d'un angle ayant une valeur moyenne de 45 degrés et modulée de plus ou moins ε autour de cette valeur moyenne, qui seule est ensuite transmise au retour dans la fibre optique 12. Dans ces conditions, on prévoit que les axes du polariseur linéaire 14 et de la lame quart d'onde 15 font entre eux un angle de 22,5 degrés, de sorte que la rotation totale moyenne entre l'angle de polarisation du faisceau incident et l'angle de polarisation du faisceau réfléchi, après ses deux passages dans la lame quart d'onde, est de 45 degrés.

Dans le mode de réalisation de la figure 3, le faisceau lumineux issu d'une fibre optique 17 est collimaté à la traversée d'une lentille 18, polarisé linéairement à la traversée d'un polariseur 19, et dirigé par un prisme 20 sur un cristal 21 en matériau à effet Kerr. Le faisceau lumineux subit alors des réflexions multiples entre le cristal 21 et un cristal 22 du même type situé en vis-à-vis de ce dernier.

Le faisceau lumineux issu de ces réflexions multiples est redirigé à la traversée d'un prisme 23, analysé à la traversée d'un autre polariseur 24, recollimaté à la traversée d'une lentille 25 et ainsi renvoyé dans une fibre optique de retour 26. Les cristaux magnéto-optiques 21 et 22 peuvent être réalisés sous la forme de deux couches en matériau à effet Kerr disposées sur les deux faces d'une lame transparente.

L'angle entre les axes des deux polariseurs 19 et 24 est ici égal à 45 degrés, de manière que, comme dans le cas précédent, la polarisation du faisceau réfléchi fasse un angle moyen de 45 degrés par rapport à celle du faisceau incident.

Dans ces conditions, seule repasse dans la fibre 26 la modulation de l'intensité lumineuse due à l'effet Kerr provoqué par les variations de champ produites par les passages successifs des dents 2 de la roue 1. Cette modulation est ici amplifiée par un facteur égal au nombre de réflexions successives sur les cristaux 21 et 22. On remarquera à ce sujet que le tachymètre selon l'invention fonctionne en tout ou rien et qu'il ne s'agit pas ici de mesurer un champ magnétique. Il n'est donc pas nécessaire de connaître le nombre de réflexions successives avec précision.

Ce tachymètre selon l'invention présente l'avantage de pouvoir être réalisé avec des composants peu coûteux et de pouvoir fonctionner à de hautes températures en environnement sévère.

## Revendications

1. Tachymètre comprenant :
- une roue dentée (1) susceptible d'être calée sur un arbre (1') dont on souhaite mesurer la vitesse de rotation ;
- un circuit magnétique (11) en vis-à-vis de la roue dentée ;
- au moins un élément (10 ; 16; ; 21, 22) en matériau magnéto-optique dans le champs magnétique dudit circuit magnétique ;
- des moyens (4, 9 ; 12, 14 ; 17, 19) pour éclairer ledit matériau à l'aide d'un faisceau de lumière polarisée; et
- des moyens de mesure (4-7) pour mesurer la rotation de la polarisation dudit faisceau résultant de son intéraction avec ledit matériau ;
caractérisé par le fait que ledit matériau magnéto-optique est un matériau à effet Kerr, ledit faisceau subissant au moins une réflexion sur au moins un cristal de ce matériau.

2. Tachymètre selon la revendication 1, dans lequel la lumière est amenée à l'aide d'une fibre optique (4 ; 12 ; 17).

3. Tachymètre selon l'une quelconque des revendications 1 et 2, comprenant un polariseur (9 ; 14 ; 19) entre la source de lumière et le cristal en matériau à effet Kerr.

4. Tachymètre selon l'une quelconque des revendications 1 à 3, comprenant en vis-à-vis deux cristaux (21, 22) en matériau à effet Kerr, sur lesquels le faisceau lumineux est successivement réfléchi une pluralité de fois.

5. Tachymètre selon l'une quelconque des revendications 1 à 4, comprenant une lame quart d'onde (15) sur le trajet du faisceau lumineux incident sur le cristal en matériau à effet Kerr, ainsi que sur le trajet du faisceau réfléchi.

6. Tachymètre selon l'une quelconque des revendications 1 à 5, comprenant une fibre optique (4 ; 12 ; 26) pour conduire le faisceau lumineux réfléchi sur le cristal en matériau à effet Kerr, jusqu'à des moyens de mesure de l'intensité dudit faisceau.

7. Tachymètre selon l'une quelconque des revendications 1 à 6, dans lequel les moyens de mesure comprennent un polariseur (9 ; 14 ; 24) disposé sur le trajet du faisceau lumineux réfléchi par le cristal en matériau à effet Kerr.

## Claims

1. Speedometer comprising:
- a gear-wheel (1) able to be keyed on a shaft (1') of which one wishes to measure the speed of rotation;
- a magnetic circuit (11) facing the gear-wheel;
- at least one member (10; 16; 21; 22) of magneto-optical material in the magnetic field of said magnetic circuit;
- means (4, 9; 12, 14; 17, 19) for illuminating said material by means of a beam of polarised light; and
- measuring means (4-7) for measuring the rotation of the polarisation of said beam resulting from its interaction with said material;
characterised by the fact that said magneto-optical material is a material having a Kerr effect, said beam undergoing at least one reflection on at least one crystal of this material.

2. Speedometer according to Claim 1, in which the light is supplied by means of an optic fibre (4; 12; 17).

3. Speedometer according to one of Claims 1 and 2, comprising a polariser (9; 14; 19) between the light source and the crystal of material having a Kerr effect.

4. Speedometer according to one of Claims 1 to 3, comprising in facing relationship two crystals (21, 22) of material having a Kerr effect, on which the light beam is successively reflected a plurality of times.

5. Speedometer according to one of Claims 1 to 4, comprising a quarter-wave plate (15) in the path of the light beam incident on the crystal of material having a Kerr effect, as well as in the path of the reflected beam.

6. Speedometer according to one of Claims 1 to 5, comprising an optic fibre (4; 12; 26) for guiding the light beam reflected on the crystal of material having a Kerr effect, as far as means for measuring the intensity of said beam.

7. Speedometer according to one of Claims 1 to 6, in which the measuring means comprise a polariser (9; 14; 24) disposed in the path of the light beam reflected by the crystal of material having a Kerr effect.

## Patentansprüche

1. Geschwindigkeitsmesser, welcher folgendes aufweist:
- ein Zahnrad (1), welches auf einer Welle (1') befestigbar ist, deren Drehgeschwindigkeit gemessen werden soll;
- einen Magnetkreis (11) dem Zahnrad gegenüberliegend;
- wenigstens ein Element (10; 16; 21, 22) aus einem magneto-optischen Material im Magnetfeld des Magnetkreises;
- Einrichtungen (4, 9; 12, 14; 17, 19) zum Ausleuchten des Materials mittels eines polarisierten Lichtstrahls; und
- Meßeinrichtungen (4 - 7) zum Messen der Rotation der Polarisation des Strahls resultierend aus der Wechselwirkung mit dem Material;
**dadurch gekennzeichnet,** daß das magneto-optische Material ein Material mit Kerr-Effekt ist, wobei der Strahl wenigstens eine Reflektion an wenigstens einem Kristall des Materials erfährt.

2. Geschwindigkeitsmesser nach Anspruch 1, bei dem der Lichtstrahl mittels einer optischen Faser (4; 12; 17) aufgebracht wird.

3. Geschwindigkeitsmesser nach einem der Ansprüche 1 oder 2, welcher einen Polarisator (9; 14; 19) zwischen der Lichtquelle und dem Kristall aus Material mit Kerr-Effekt aufweist.

4. Geschwindigkeitsmesser nach einem der Ansprüche 1 bis 3, welcher einander gegenüberliegend zwei Kristalle (21, 22) aus Material mit Kerr-Effekt aufweist, auf denen die Lichtstrahlen aufeinanderfolgend mehrmals reflektiert werden.

5. Geschwindigkeitsmesser nach einem der Ansprüche 1 bis 4, welcher ein λ/4-Blättchen (15) im Lichtstrahlengang aufweist, welcher auf den Kristall aus Material mit Kerr-Effekt trifft, sowie an dem reflektierten Strahlengang.

6. Geschwindigkeitsmesser nach einem der Ansprüche 1 bis 5, welcher eine optische Faser (4; 12; 26) zur Übertragung eines Lichtstrahls, welcher an dem Kristall aus Material mit Kerr-Effekt reflektiert worden ist, zu einer Meßeinrichtung die Lichtintensität aufweist.

7. Geschwindigkeitsmesser nach einem der Ansprüche 1 bis 6, bei dem die Meßeinrichtung einen Polarisator (9; 14; 24) aufweist, welcher in dem Lichtstrahlengang angeordnet ist, welcher durch den Kristall aus Material mit Kerr-Effekt reflektiert wird.
